# EUROPEAN PATENT SPECIFICATION

(11) **EP 3 838 821 B1**
(45) Date of publication and mention of the grant of the patent: **02.11.2022**
(21) Application number: 20214074.5
(22) Date of filing: 15.12.2020
(51) Int. Cl.: B65H 49/08, B65H 55/04, B65H 57/12, B65D 85/04, G02B 6/44

(54) **COILED PRODUCT DISPENSING KIT**
AUSGABEVORRICHTUNG FÜR SPULENPRODUKT
KIT DE DISTRIBUTION DE PRODUITS ENROULÉS

(30) Priority: 17.12.2019 IT 201900024187
(43) Date of publication of application: 23.06.2021
(73) Proprietor: Prysmian S.p.A., 20126 Milano (IT)
(72) Inventor: LE DISSEZ, Arnaud, 20126 MILANO (IT); LAVENNE, Alain, 20126 MILANO (IT); FERRER, Jean Paul, 20126 MILANO (IT)
(74) Representative: Cevini, Gaia

(56) References cited:
- US-A- 3 608 710
- US-A- 5 152 476
- US-B2- 7 330 627

## Description

### Technical field

The present invention relates to the field of kits for dispensing a product in the form of a filament (such as a wire or a cable) from a coil thereof. Examples of such products are fiber optic cables, electric wires, electric cables or the like.

### Background art

In FTTH (Fiber To The Home) applications, a drop cable is usually wound onto a cardboard reel which is provided in a cardboard box. The cable can typically be unwound directly from an opening in the box.

As known, however, unwinding a fiber optic cable from a reel may be critical because of the twisting that may be imparted on the cable. To address this issue, a figure-eight coil arrangement may be adopted for coiling the cable, which allows creating a pre-twist on the cable for compensating the twist introduced by the cable unwinding.

US 7,330,627 B2 discloses cable arrangements including a length of springy cable looped in a figure 8 arrangement with an intermediate cross-over section between respective first and second looped sections of the cable. The figure 8 arrangement enables withdrawal of the cable from the arrangement with no more than a single twist of the cable to limit accumulated net linear twist of the cable while linearly extending the cable. The first and second looped sections may be positioned overlapping each other to provide a substantially toroidal shaped cable arrangement. An optical device may be provided on one or both of the ends of the length of cable. The springy cable may be a fiber optic cable, such as flat drop cable. Cable products, enclosures and methods of forming a cable arrangement are also provided.

Figure-eight coiled cables are typically packaged in a box, usually a cardboard box, provided with an opening and a guiding device arranged in this opening for allowing passage of the cable during unwinding. In particular, the guiding device may be a payout tube through which a free end of the cable can be passed for unwinding purposes.

US 5,152,476 A discloses an improvement for payout tubes secured within a container for a coil of cable therein so that the tube projects at its exit end through a hole in a wall of the container. The tube is adapted to dispense cable fed into its entrance end from inside to outside the container. The improvement is, broadly, providing at such entrance end a curved cable support surface extending around the tube of large enough radius of curvature to prevent deformation in cable, fed in contact with the surface into the tube, of tight bends causing kinking of and damage to the cable. Such surface may be provided either on a cap in turn fittable onto the tube at its entrance end or, alternatively, directly on the tube at that end. US 5,152,476 A discloses a coiled product dispensing kit according to the preamble of claim 1.

### Summary of the invention

A FTTH drop cable is typically pre-terminated at an end thereof with a connector assembly such as a Compact Termination Box (CTB) with, for instance, SC/APC (Subscriber Connector/Angle Polished Connector) connectors. When installing the drop cable at the user premises, typically the cable must be unwound out of the box before installation and the CTB must be accessed to be mounted at the user premises. However, typically, payout tubes such as those described in US 5,152,476 A are not adapted for allowing pulling out the entire length of the cable as the CTB can not pass through them.

Generally, in applications where a pre-terminated cable is provided, in which a connector assembly such as a CTB is pre-assembled at an end of the cable, the guiding device arranged in the box must have a dimension large enough to allow passage of the connector assembly. However, this would make the dispensing kit disadvantageously bulky while limiting the good functioning of the guiding device.

In view of the above, the Applicant has tackled the problem of providing a coiled product dispensing kit for dispensing a filamentary product having a connector assembly attached at an end thereof, which allows overcoming the drawback outlined herein above. In particular, the Applicant has tackled the problem of providing a coiled product dispensing kit allowing to efficiently dispensing a filamentary product having a connector assembly attached at an end thereof without increasing the dimensions of the guiding device.

In one aspect, the present invention relates to a coiled product dispensing kit comprising:
- a coil of a filamentary product and a connector assembly attached to an end of the filamentary product, wherein the connector assembly is located outside the coil;
- an enclosure surrounding the coil and the connector assembly, and
- a payout tube configured to pass a length of the filamentary product through it, the payout tube extending through an opening formed in the enclosure and having an entrance end inside an area surrounded by the coil and an exit end outside the enclosure,
wherein the payout tube is configured to be folded open lengthwise to release the length of the filamentary product.

In an embodiment, the payout tube is a single piece of material comprising a weakened line along the length of the payout tube.

In another embodiment, the payout tube is made of two or more detachable longitudinally extending portions.

In an embodiment, the payout tube comprises two half portions thereof, wherein each portion of the payout tube comprises coupling means for attaching the two half portions together.

In particular, the coupling means may comprise, on a first half portion of the payout tube, a couple of hooks, and, on a second half portion of the payout tube, a couple of recesses, wherein each hook comprises a tooth configured to engage an edge of a corresponding recess when the two half portions are attached together.

In an embodiment, the payout tube comprises a stop lug in the form of an annular segment projecting radially outwardly from an outer surface of the payout tube, the stop lug being located at a distance from the exit end of the payout tube substantially corresponding to a thickness of the enclosure.

In an embodiment, the payout tube comprises a tubular sleeve and a fixing ring separable from the tubular sleeve and configured to be fitted on the tubular sleeve at the exit end of the payout tube.

In an embodiment, the tubular sleeve comprises an annular relief for blocking the fixing ring onto the tubular sleeve.

In an embodiment, the fixing ring comprises first and second half portions, each half portion comprising a male fastener and a female fastener, wherein the male fastener of a first half portion is configured to engage the female fastener of the second half portion and vice versa for attaching the first and second half portions together.

In an embodiment, the payout tube further comprises a hollow truncated cone, wherein a base of the truncated cone corresponds to the entrance end of the payout tube.

In an embodiment, the base of the hollow truncated cone has a circumferential edge comprising a lip, wherein the lip has a cross-section whose radius is higher than a minimum bending radius of the filamentary product.

In an embodiment, the payout tube is made of one of the following materials: cardboard, thermoformed polylactic acid, molded fiber, injection molded biopolymer.

In an embodiment, the enclosure is made by a cardboard strip having a variable width, wherein the width is maximum at the opening and is minimum at an opposite position.

In an embodiment, the enclosure is folded to form three adjacent straight walls arranged on perpendicular planes and two corners between the straight walls.

In an embodiment, the coiled product dispensing kit further comprises a heat-shrinkable thermo-plastic film covering the enclosure surrounding the coil and the connector assembly, and the payout tube.

### Brief description of the drawings

Further characteristics and advantages will become more apparent by reading the following detailed description of an embodiment given as an example with reference to the accompanying drawings, wherein:
- Figure 1 schematically shows a coiled product dispensing kit according to an embodiment of the present invention;
- Figure 2 schematically shows two coiled product dispensing kits stacked one onto the other according to an advantageous embodiment of the present invention;
- Figure 3 schematically shows a payout tube for the coiled product dispensing kit according to an embodiment of the present invention;
- Figure 4 schematically shows an exploded view of the payout tube of Figure 2;
- Figures 5a and 5b schematically show a cross-section of the payout tube according to embodiments of the present invention.

### Detailed description of preferred embodiments of the invention

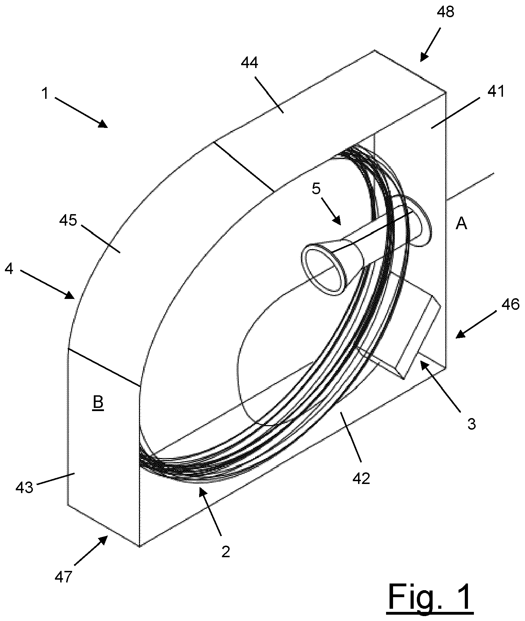

Figure 1 schematically shows a coiled product dispensing kit 1 (also referred to simply as dispensing kit) according to an embodiment of the present invention.

The dispensing kit 1 comprises a coiled product 2 in the form of a coil of a filamentary product such as a length of an optic cable or electric wire. An end of the filamentary product is attached to a connector assembly 3 such as a CTB for an optic cable, comprising an SC/APC connector. The other end of the filamentary product is preferably drawn outside the dispensing kit 1 as it will be described herein after. The coil of the filamentary product is preferably made in a figure-eight arrangement.

The dispensing kit 1 further comprises an enclosure 4 surrounding the coil of filamentary product 2. The enclosure 4 may be made by a cardboard strip arranged to surround the coil of filamentary product. As schematically shown in Figure 1, a cardboard strip may be folded to form an enclosure with straight and/or curved walls. Straight adjacent walls may be arranged on perpendicular planes thus forming one or more corners in the enclosure. In the exemplary embodiment shown in Figure 1, the enclosure 4 comprises four straight walls, which will be indicated as first wall 41, second wall 42, third wall 43 and fourth wall 44, and a curved wall 45. The curved wall 45 is positioned between the third wall 43 and the fourth wall 44. The straight walls 41, 42, 43 are two by two arranged on perpendicular planes and form a first corner 46 and a second corner 47, while an optional third corner 48 is formed between the first wall 41 and the fourth wall 44. It is to be noticed that when at least two adjacent corners 46, 47 are formed, as in the embodiment shown in Figure 1, the dispensing kit may advantageously be held in a vertical position laying on the enclosure's wall comprised between the two corners (in this exemplary case, the dispensing kit may stand vertically on the second wall 42).

In the dispensing kit according to the present invention, the connector assembly 3 is located outside the coil, for instance at one of the corners. For instance, it may be located at the first corner 46 of the enclosure 4, as schematically shown in Figure 1.

A wall of the enclosure comprises an opening (not shown in the drawings) configured to pass a payout tube 5 through it. The opening may be circular. In the example shown in Figure 1, the opening is located in the first straight wall 41 of the enclosure 4.

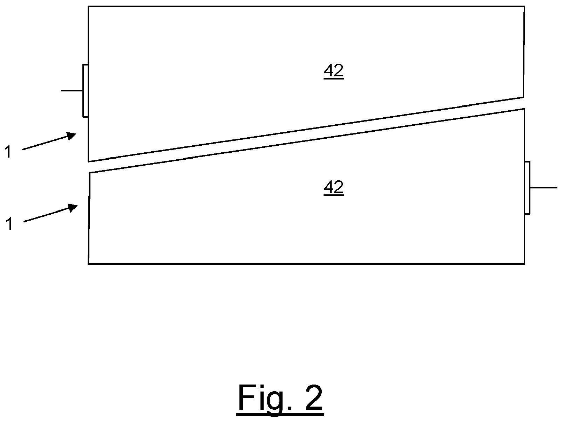

According to the present invention, the width of the cardboard strip of the enclosure 4 may be constant along the length of the strip, as shown in Figure 1, or it may vary along the length of the strip. In particular, according to an advantageous embodiment, the width of the cardboard strip may range from a maximum value at a position substantially corresponding to the position of the opening (position A in Figure 1) and a minimum value at an opposite position (position B in Figure 1). The maximum value of the width may range between 60 mm and 120 mm, while the minimum value of the width may range between 30 mm and 100 mm. Advantageously, this configuration allows stacking two dispensing kits with reduced size as schematically shown in Figure 2. Indeed, the two kits may be piled so that the dispensing kit above has its shorter side in correspondence of the taller side of the dispensing kit below. Therefore, the total height of the two dispensing kits when stacked together is nearly equal to the sum of the maximum and minimum values of the width of the cardboard strip used in each dispensing kit.

The dispensing kit according to the present invention comprises a payout tube 5 configured to pass a length of the filamentary product through it, to draw the filamentary product outside the enclosure. The payout tube 5 extends through the opening formed in the enclosure 4 and has an entrance end inside an area surrounded by the coil 2 and an exit end outside the enclosure 4. The payout tube 5 is configured to be folded open lengthwise to provide access to its interior volume and release the length of the filamentary product housed therein. Once the payout tube 5 is folded open, also the connector assembly 3 can be released from the enclosure 4, as it will be described herein below.

In particular, the payout tube has a closed ring cross-section configured to be opened at least at one position, where the tube's cross section may comprise a cut or, alternatively, a notch defining a thinning of the sidewall thickness. In the former case, the payout tube comprises at least one longitudinal cut that may be used to open the payout tube lengthwise. In the latter case, the thinning of the sidewall thickness defines, lengthwise, a weakened line that may be used to cut or tear the payout tube and fold it open.

More in particular, according to first embodiments of the present invention, the payout tube 5 may comprise two or more longitudinal cuts and it be made by two or more detachable longitudinally extending portions. According to second embodiments of the present invention, the payout tube 5 can be made of a single piece of material and comprise, in its sidewall, at least one weakened line extending along the length of the payout tube, which serves for cutting or tearing the payout tube 5 and folding it open.

It is particular advantageous that in all the embodiments of the present invention, the payout tube 5 is made by a material that may be chosen to be 100% recyclable. In particular, the material of the payout tube 5 meets the European Standard EN 13432:2000. This material may be one of the following: cardboard, thermoformed PLA (Polylactic Acid), molded fiber, injection molded biopolymer, or the like. The material of the payout tube 5 may be the INZEA^{®} type F38, F29HT10, or F2 HTS 451 thermoplastic material by Nurel Engineering Polymers, Nurel S.A. Zaragoza, Spain.

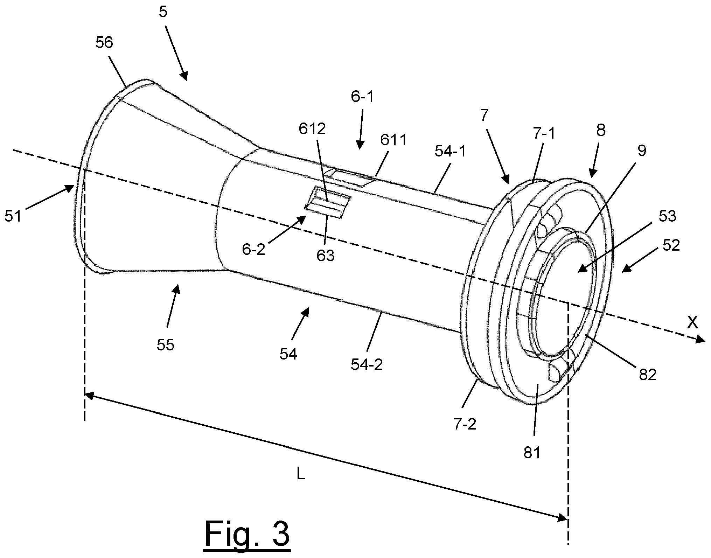

Figure 3 shows a payout tube 5 comprising two detachable longitudinally extending half portions, according to one of the first embodiments of the present invention. Figure 3 also shows a longitudinal axis X.

The payout tube 5 of Figure 3 has an entrance end 51, an exit end 52, and a central passage 53 for the cable. At the entrance end 51, a back opening of the central passage is located. Similarly, at the exit end, a front opening of the central passage is located. The payout tube 5 has a length L which is comprised between 60 mm and 200 mm. For instance the length L of the payout tube may be 90 mm.

The payout tube 5 of Figure 3 comprises a tubular sleeve 54 and a truncated hollow cone 55. It is to be noticed that the structure of the payout tube of Figure 3 is merely an example. Indeed, for instance, the presence of the truncated hollow cone is optional. However, in the following description, reference will be made to the payout tube of Figure 3 for sake of example.

The tubular sleeve 54 has a first end corresponding to the exit end 52 of the payout tube 5 and a second end at which the tubular sleeve 54 is connected to the truncated cone 55. The truncated cone 55 has a first end at which it is connected to the tubular sleeve 54 and a second end corresponding to the entrance end 51 of the payout tube 5. At its first end, the diameter of the truncated cone 55 is substantially equal to the diameter of the tubular sleeve 54, while it increases towards the second end, which hence corresponds to the base of the truncated cone. The diameter of the central passage 53 at the tubular sleeve 54 is comprised between 15 mm and 30 mm, for instance it may be equal to 25 mm. The diameter of the central passage 53 at the base of the truncated cone 55 is comprised between 30 mm and 60 mm, for instance it may be equal to 50 mm.

At the entrance end 51, the circumferential edge of the base of the truncated cone 55 may comprise a lip 56. The cross-section of the lip 56 has a radius which is slightly higher than a minimum bending radius of the cable, to avoid any kink in the cable.

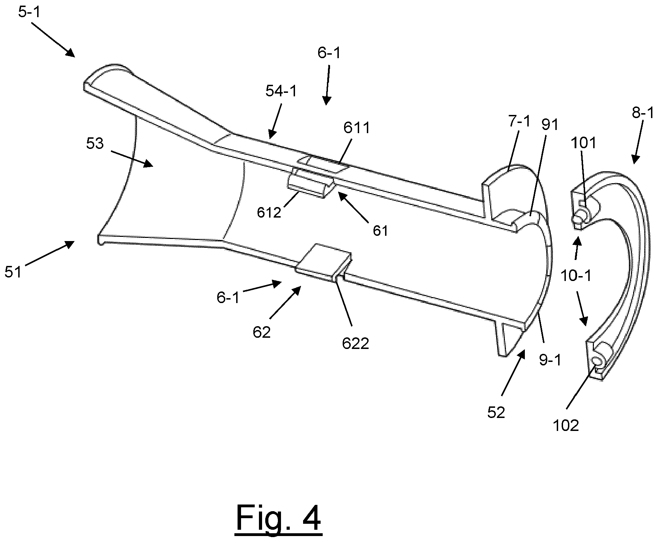

Figure 4 shows a detachable longitudinally extending portion 5-1 of the payout tube 5 of Figure 3.

Each portion of the payout tube 5 comprises a portion of the tubular sleeve 54 and a portion of the truncated cone 55. In particular, for the exemplary payout tube shown in Figures 3 and 4, each half portion of the payout tube 5 comprises a half portion of the tubular sleeve 54 and a half portion of the optional truncated cone 55.

Each portion of the tubular sleeve 54 may comprise coupling means for attaching the two half portions of the payout tube 5 together. The coupling means may be located at a substantially intermediate position between the exit end 51 and the entrance end 52 of the payout tube 5.

Figure 4 shows exemplary coupling means 6-1 of a first half portion 54-1 of the tubular sleeve. They are formed in the sidewall of the half portion 54-1 of the tubular sleeve along the edge thereof. They comprise two hooks 61, 62 located along a respective edge of the sidewall at diametrically opposed positions with respect to the longitudinal axis X. Each hook 61, 62 comprises a recess 611 formed in the sidewall of the half portion of the tubular sleeve. The recess 611 has a rectangular shape. Each hook 61, 62 further comprises a tooth 612, 622 located under the recess 611 inside the central passage 53.

The exemplary coupling means 6-2 of a second half portion 54-2 of the tubular sleeve are formed in the sidewall of the half portion of the tubular sleeve at corresponding positions with respect to the coupling means 6-1 of the first half portion 54-1 of the tubular sleeve. They comprise two recesses formed in the sidewall of the second half portion 54-2 of the tubular sleeve and located at diametrically opposed positions with respect to the longitudinal axis X.

The tooth 612, 622 of each hook 61, 62 in the first half portion 54-1 of the tubular sleeve is configured to engage an edge of a corresponding recess in the second half portion 54-2 of the tubular sleeve when the payout tube 5 is assembled, as shown in Figure 3. In particular, Figure 3 shows tooth 612 engaging an edge of recess 63 in in the second half portion 54-2 of the tubular sleeve.

In a position near the exit end 52 of the payout tube (in particular, at a distance form the exit end 52 substantially corresponding to the thickness of the cardboard strip of the enclosure 4), the payout tube 5 comprises a stop lug 7. In particular, according to the embodiment shown in Figure 3, each half portion 54-1, 54-2 of the tubular sleeve may comprise a respective half portion 7-1, 7-2 of the stop lug in the form of an annular segment projecting radially for a few millimeters (such as in the range from 5 mm to 20 mm) outwardly from the outer surface of the tubular sleeve 54. The angular extent of each portion 7-1, 7-2 of the stop lug shown in Figures 3 and 4 is substantially 180° as each portion 7-1, 7-2 of the stop lug circumferentially surrounds the respective half portion 54-1, 54-2 of the tubular sleeve. The stop lug 7 has an outer surface configured to bear against the inner surface of the enclosure 4 when the payout tube 5 is assembled in position within the opening in the enclosure. In particular, the outer surface of the stop lug 7 bears against the inner surface of the enclosure 4 around the boundary of the opening.

The payout tube 5 may further comprise a fixing ring 8. The fixing ring 8 is separable from the tubular sleeve 54 and configured to be fitted on the tubular sleeve 54 at the exit end 52 of the payout tube. The fixing ring 8 is configured to be fitted on the tubular sleeve 54 at the exit end 52 of the payout tube 5 so that when the payout tube 5 is positioned through the opening, the portion of the first wall 41 of the enclosure 4 around the opening may be gripped between the stop lug 7 and the fixing ring 8 and the payout tube 5 is secured in position in the opening.

The fixing ring 8 has a flat annular base 81 and an outer projecting edge 82, at the outer boundary of the annular base. The outer diameter of the fixing ring may correspond to the maximum radial extent of the stop lug 7.

The fixing ring 8 may be made by a material such as cardboard, thermoformed PLA (Polylactic Acid), moulded fiber, injection molded biopolymer, or the like.

The fixing ring 8 as shown in Figures 3 and 4 comprises two half portions 8-1, 8-2 configured to be fitted on the two half portions 54-1, 54-2 of the tubular sleeve, as it will be described herein after.

At the exit end 52, each half portion 54-1, 54-2 of the tubular sleeve 54 comprises a respective half portion of an annular relief 9. Figure 4 schematically shows a first portion 9-1 of the annular relief. The annular relief 9 is configured to block the fixing ring 8 onto the tubular sleeve 54. The annular relief 9 may be subdivided into sectors 91 for increasing flexibility. In particular, as shown in Figure 3, when the fixing ring 8 is pushed onto the tubular sleeve 54, the sectors 91 slightly flex inwardly to allow the fixing ring 8 to pass The annular relief 9 then keeps the fixing ring 8 in position on the tubular sleeve 54 as it blocks any sliding movement of the fixing ring 8 away from the tubular sleeve 54.

Figure 4 schematically shows a first half portion 8-1 of the fixing ring. It may comprise, at diametrically opposite positions, engagement means 10-1 to fix the two half portions 8-1, 8-2 of the fixing ring together. The engagement means 10-1 are positioned at the edges of the first half portion 8-1 of the fixing ring. The engagement means on the first half portion 8-1 of the fixing ring comprise a male fastener 101 and a female fastener 102, which are located at opposite positions on the edge of the first half portion 8-1 with respect to the longitudinal axis X. The male fastener 101 on the first half portion 8-1 of the fixing ring is configured to engage a female fastener similar to female fastener 102 shown in Figure 4 on the second half portion 8-2 of the fixing ring, and vice versa the female fastener 102 on the first half portion 8-1 of the fixing ring is configured to engage a male fastener similar to male fastener 101 shown in Figure 4 on the second half portion 8-2 of the fixing ring. The male fastener on each half portion 8-1, 8-2 of the fixing ring comprises a pin while the female fastener comprises a corresponding hole configured to receive the pin.

The manner in which the payout tube 5 is secured to the enclosure 4 will be described in the following lines. Firstly, the two half portions 5-1, 5-2 of the payout tube are attached together by means of the coupling means 6-1, 6-2. Then, the payout tube 5 is axially aligned with the opening in the first wall 41 of the enclosure and advanced towards the enclosure's first wall 41 to pass the end portion of the tubular sleeve (namely, the portion of the tubular sleeve comprised between the stop lug 7 and the exit end 52) though the opening. The payout tube 5 is stopped when the stop lug 7 comes into contact with the inner surface of the portion of the first wall 41 of the enclosure located around the opening. The end portion of the tubular sleeve 54 then projects from the outer surface of the first wall 41 of the enclosure towards the exterior of the enclosure 4. At this point, the fixing ring 8 is assembled by attaching the two half portions 8-1, 8-2 together. This is done by means of the engagement means of the fixing ring, in particular by engaging the male and female fasteners 101, 102 on the first half portion 8-1 with, respectively, the female and male fasteners on the second half portion 8-2. Once the fixing ring 8 is assembled, it is fitted onto the end portion of the tubular sleeve 54 as described above, so that the portion of the first wall 41 of the enclosure located around the opening is firmly sandwiched between the stop lug 7 and the fixing ring 8 and the payout tube 5 is held in position through the opening.

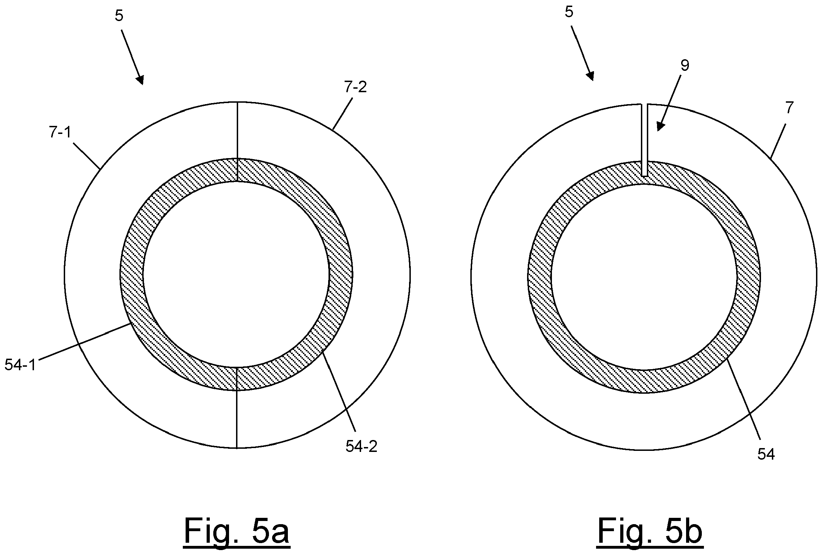

Figure 5a schematically shows a cross section of the payout tube 5 of Figure 3 at a position intermediate between the coupling means and the stop lug (sizes are not in scale). Figure 5a in particular schematically shows the two longitudinal cuts of the payout tube 5 of Figures 3 and 4, which divide the payout tube 5 into the two longitudinally extending detachable portions described above.

According to the second embodiments of the present invention, the payout tube is made of a single piece of material and comprises at least one longitudinally extending weakened line for cutting or tearing the payout tube and folding it open. Figure 5b schematically shows a cross section of the payout tube 5 wherein a weakened line 9 is defined in the sidewall of the tube (sizes are not in scale). The weakened line may be a straight line longitudinally extending over the whole length of the payout tube, so that when the line is cut the payout tube may be folded open and release the length of the cable housed therein. Alternatively, the payout tube may comprise two opposite weakened lines which allow to split the payout tube in two parts. Further alternatively, the weakened line may be a curved line helically extending along the whole length of the payout tube.

The shape of the payout tube according to one second embodiment of the invention may be the same as already described above with reference to Figure 3, namely the payout tube may comprise a tubular sleeve connected to a truncated cone at the entrance end.

According to these second embodiments, in a position near the exit end of the payout tube the payout tube comprises a stop lug in the form of an annular segment projecting radially for a few millimeters (such as in the range from 5 mm to 20 mm) outwardly from the outer surface of the tubular sleeve and with an angular extent of substantially 360°, as it circumferentially surrounds the tubular sleeve. It is to be noticed that, according to these second embodiments, the weakened line also crosses the stop lug (as schematically shown in Figure 5b). Moreover, the payout tube comprises a fixing ring (possibly provided as a single piece of material) and an annular relief similar to, respectively, the fixing ring and the annular relief already described above with reference to Figures 3 and 4. The fixing ring may be provided with one or more weakened lines allowing to cut or tear it when the payout tube is to be disassembled to release the length of the cable housed therein and the connector assembly. The manner in which the payout tube of these second embodiments is secured to the enclosure may hence be the same as already described above with reference to the first embodiments.

In the following lines, the process for assembling and using the dispensing kit 1 according to an embodiment of the present invention will be described.

According to the exemplary embodiment schematically shown in Figure 1, a length of a fiber optic cable is looped in a figure-eight arrangement. The length of the optic fiber cable comprises, at a first end, the connector assembly 3, and, optionally, at a second end, a conventional pulling or pushing system used for dispensing the cable (not shown in the drawings). The enclosure 4 is then arranged to surround the coil 2 of the fiber optic cable and the connector assembly 3. For instance, the enclosure 4 may be folded as shown in Figure 1 to form four straight walls and a curved wall as described above. The connector assembly 3 is placed outside the coil 2, for instance at the first corner 46 of the enclosure.

In the meantime, with reference to the payout tube 5 shown in Figures 3 and 4, the payout tube 5 is partly assembled by attaching the two half portions 5-1, 5-2 together. The payout tube 5 is then secured to the first wall 41 of the enclosure as described above by fitting the fixing ring 8 on the end portion of the tubular sleeve projecting outwards from the enclosure 4.

The second end of the coiled cable 2 is then positioned inside the payout tube 5 and made to pass through the payout tube 5 so as to exit the enclosure 4.

At this point, the enclosure 4, surrounding the coil 2 of fiber optic cable and the connector assembly 3, and the payout tube 5 may be covered by a film, in particular a heat-shrinkable thermo-plastic film (not shown in the drawings). Advantageously the heat-shrinkable thermo-plastic film is made of a biopolymer or another biodegradable material (such as a material chosen to meet the European Standard EN 13432:2000). The material of the heat shrinkable thermo-plastic film may be the INZEA^{®} F15C thermoplastic material by Nurel Engineering Polymers, Nurel S.A. Zaragoza, Spain.

When the cable is to be dispensed, the film covering is removed at the enclosure's opening and the second end of the cable may be pulled or pushed using the conventional pulling or pushing system cited above. Then the fiber optic cable is unwound as it is pulled out of the enclosure 4 through the exit end of the payout tube 5. When the cable is almost entirely pulled out from the enclosure 4, the enclosure 4 is cut and the payout tube 5 is disassembled. This may be done, for the payout tube 5 of Figures 3 and 4, by operating on the coupling means 6-1, 6-2 of the tubular sleeve 54, in particular by pushing the tooth of each of the two diametrically opposed hooks 61, 62 of the first half portion 54-1 of the tubular sleeve into the recesses placed on the sidewall of the second half portion 54-2 of the tubular sleeve. In this way, also the engagement means of the fixing ring 8 disengage. As a result, the payout tube 5 is split into its two half portions to free the connector assembly 3 at the first end of the cable.

According to the second embodiments described herein above, the payout tube may be disassembled by cutting or tearing the at least one weakened line to open the payout tube. In this way, the connector assembly at the first end of the cable can be released.

Advantageously, the coiled product dispensing kit according to the present invention allows to efficiently dispense a filamentary product having a connector assembly attached at an end thereof without increasing the dimensions of the payout tube. Indeed, the payout tube described above may be made by two or more detachable longitudinally extending portions, which can be detached from each other to free the connector assembly without having to impose any constraint on the dimensions of the payout tube. Alternatively, the payout tube may be made of a single piece of material and comprise a weakened line to cut or tear the payout tube so that it may be folded open to release the cable housed therein and free the connector assembly. Further advantageously, the waste materials are all 100% recyclable and occupy a reduced volume in comparison with boxes. Finally, as already discussed above, the dispensing kit may be realized in particular configurations allowing to reduce the size when a number of dispensing kits are stacked one onto the other for palletization.

## Claims

1. A coiled product dispensing kit (1) comprising:
- a coil (2) of a filamentary product;
- an enclosure (4) surrounding said coil (2), and
- a payout tube (5) configured to pass a length of said filamentary product through it, the payout tube (5) extending through an opening formed in said enclosure (4) and having an entrance end (51) inside an area surrounded by the coil (2) and an exit end (52) outside said enclosure (4),
**characterized in that** the coiled product dispensing kit (1) further comprises a connector assembly (3) attached to an end of said filamentary product, the connector assembly (3) being located outside said coil (2), wherein said enclosure (4) surrounds said connector assembly (3) and said payout tube (5) is configured to be folded open lengthwise to release said length of said filamentary product.

2. A coiled product dispensing kit (1) according to claim 1, wherein said payout tube is a single piece of material comprising a weakened line along the length of the payout tube.

3. A coiled product dispensing kit (1) according to claim 1, wherein said payout tube (5) is made of two or more detachable longitudinally extending portions (5-1, 5-2).

4. The coiled product dispensing kit (1) according to any of the preceding claims, wherein the payout tube (5) comprises a stop lug (7) in the form of an annular segment projecting radially outwardly from an outer surface of the payout tube (5), the stop lug (7) being located at a distance from the exit end (52) of the payout tube substantially corresponding to a thickness of said enclosure (4).

5. The coiled product dispensing kit (1) according to any of the preceding claims, wherein the payout tube (5) comprises a tubular sleeve (54) and a fixing ring (8) separable from said tubular sleeve (54) and configured to be fitted on the tubular sleeve (54) at the exit end (52) of the payout tube.

6. The coiled product dispensing kit (1) according to claim 5, wherein said tubular sleeve (54) comprises an annular relief (9) for blocking said fixing ring (8) onto said tubular sleeve (54).

7. The coiled product dispensing kit (1) according to any of the preceding claims, wherein said payout tube is made of one of the following materials: cardboard, thermoformed polylactic acid, molded fiber, injection molded biopolymer.

8. The coiled product dispensing kit (1) according to any of the preceding claims, wherein said enclosure (4) is made by a cardboard strip having a variable width, wherein said width is maximum at said opening and is minimum at an opposite position (4).

9. The coiled product dispensing kit (1) according to any of the preceding claims, wherein said enclosure (4) is folded to form three adjacent straight walls arranged on perpendicular planes and two corners between said straight walls.

10. The coiled product dispensing kit (1) according to any of the preceding claims, further comprising a heat-shrinkable thermo-plastic film covering said enclosure (4) surrounding the coil (2) and the connector assembly (3), and the payout tube (5).

## Patentansprüche

1. Ausgabevorrichtung für Spulenprodukt (1), umfassend:
- eine Spule (2) aus einem fadenförmigen Produkt;
- eine Umhüllung (4), die die Spule (2) umgibt, und
- ein Ausgaberohr (5), das so konfiguriert ist, dass eine Länge des fadenförmigen Produkts hindurchgeführt werden kann, wobei sich das Ausgaberohr (5) durch eine in dem Gehäuse (4) ausgebildete Öffnung erstreckt und ein Eingangsende (51) innerhalb eines von der Spule (2) umgebenen Bereichs und ein Ausgangsende (52) außerhalb des Gehäuses (4) aufweist, **dadurch gekennzeichnet, dass** die Ausgabevorrichtung für das Spulenprodukt (1) ferner eine Verbindungsbaugruppe (3) umfasst, die an einem Ende des fadenförmigen Produkts angebracht ist, wobei die Verbindungsbaugruppe (3) außerhalb der Spule (2) angeordnet ist, wobei das Gehäuse (4) die Verbindungsbaugruppe (3) umgibt und das Ausgaberohr (5) so konfiguriert ist, dass es der Länge nach aufgeklappt werden kann, um die Länge des fadenförmigen Produkts freizugeben.

2. Ausgabevorrichtung für Spulenprodukt (1) nach Anspruch 1, wobei das Ausgaberöhrchen ein einzelnes Materialstück ist, das eine geschwächte Linie entlang der Länge des Ausgaberöhrchens aufweist.

3. Ausgabevorrichtung für Spulenprodukt (1) nach Anspruch 1, wobei das Ausgaberohr (5) aus zwei oder mehr abnehmbaren, sich in Längsrichtung erstreckenden Teilen (5-1, 5-2) besteht.

4. Ausgabevorrichtung für Spulenprodukt (1) nach einem der vorhergehenden Ansprüche, wobei das Ausgaberohr (5) eine Anschlagnase (7) in Form eines ringförmigen Segments aufweist, das von einer Außenfläche des Ausgaberohrs (5) radial nach außen vorsteht, wobei die Anschlagnase (7) in einem Abstand vom Ausgangsende (52) des Ausgaberohrs angeordnet ist, der im Wesentlichen einer Dicke des Gehäuses (4) entspricht.

5. Ausgabevorrichtung für Spulenprodukt (1) für ein gewickeltes Produkt nach einem der vorhergehenden Ansprüche, wobei das Ausgaberohr (5) eine rohrförmige Hülse (54) und einen Befestigungsring (8) umfasst, der von der rohrförmigen Hülse (54) trennbar ist und so gestaltet ist, dass er auf die rohrförmige Hülse (54) am Austrittsende (52) des Ausgaberohrs aufgesetzt werden kann.

6. Ausgabevorrichtung für Spulenprodukt (1) nach Anspruch 5, wobei die rohrförmige Hülse (54) eine ringförmige Aussparung (9) zum Blockieren des Befestigungsrings (8) auf der rohrförmigen Hülse (54) aufweist.

7. Ausgabevorrichtung für Spulenprodukt (1) nach einem der vorhergehenden Ansprüche, wobei das Ausgaberöhrchen aus einem der folgenden Materialien hergestellt ist: Pappe, thermogeformte Polymilchsäure, geformte Faser, spritzgegossenes Biopolymer.

8. Ausgabevorrichtung für Spulenprodukt (1) nach einem der vorhergehenden Ansprüche, wobei das Gehäuse (4) aus einem Pappstreifen mit variabler Breite hergestellt ist, wobei die Breite an der Öffnung maximal und an einer gegenüberliegenden Position (4) minimal ist.

9. Ausgabevorrichtung für Spulenprodukt (1) zur Abgabe eines aufgerollten Produkts nach einem der vorhergehenden Ansprüche, wobei das Gehäuse (4) so gefaltet ist, dass es drei benachbarte gerade Wände, die in senkrechten Ebenen angeordnet sind, und zwei Ecken zwischen den geraden Wänden bildet.

10. Ausgabevorrichtung für Spulenprodukt (1) nach einem der vorhergehenden Ansprüche, die ferner eine wärmeschrumpfbare thermoplastische Folie umfasst, die das Gehäuse (4), das die Spule (2) und die Anschlussbaugruppe (3) umgibt, und das Ausgaberohr (5) abdeckt.

## Revendications

1. Kit de distribution de produit enroulé (1) comprenant :
- une bobine (2) d'un produit filamentaire ;
- une enceinte (4) encerclant ladite bobine (2), et
- un tube dévidoir (5) configuré pour faire passer une longueur dudit produit filamentaire à travers celui-ci, le tube dévidoir (5) s'étendant à travers une ouverture formée dans ladite enceinte (4) et ayant une extrémité d'entrée (51) à l'intérieur d'une zone encerclée par la bobine (2) et une extrémité de sortie (52) à l'extérieur de ladite enceinte (4),
**caractérisé en ce que** le kit de distribution de produit enroulé (1) comprend en outre un ensemble connecteur (3) fixé à une extrémité dudit produit filamentaire, l'ensemble connecteur (3) étant situé à l'extérieur de ladite bobine (2), dans lequel ladite enceinte (4) encercle ledit ensemble connecteur (3) et ledit tube dévidoir (5) est configuré pour être déplié dans le sens de la longueur pour libérer ladite longueur dudit produit filamentaire.

2. Kit de distribution de produit enroulé (1) selon la revendication 1, dans lequel ledit tube dévidoir est une unique pièce de matériau comprenant une ligne de faiblesse le long de la longueur du tube dévidoir.

3. Kit de distribution de produit enroulé (1) selon la revendication 1, dans lequel ledit tube dévidoir (5) est constitué de deux parties détachables s'étendant longitudinalement (5-1, 5-2) ou plus.

4. Kit de distribution de produit enroulé (1) selon l'une quelconque des revendications précédentes, dans lequel le tube dévidoir (5) comprend un ergot d'arrêt (7) sous la forme d'un segment annulaire faisant saillie radialement vers l'extérieur à partir d'une surface externe du tube dévidoir (5), l'ergot d'arrêt (7) étant situé à une distance de l'extrémité de sortie (52) du tube dévidoir correspondant sensiblement à une épaisseur de ladite enceinte (4).

5. Kit de distribution de produit enroulé (1) selon l'une quelconque des revendications précédentes, dans lequel le tube dévidoir (5) comprend un manchon tubulaire (54) et une bague de fixation (8) séparable dudit manchon tubulaire (54) et configurée pour être emboîtée sur le manchon tubulaire (54) au niveau de l'extrémité de sortie (52) du tube dévidoir.

6. Kit de distribution de produit enroulé (1) selon la revendication 5, dans lequel ledit manchon tubulaire (54) comprend un relief annulaire (9) pour le blocage de ladite bague de fixation (8) sur ledit manchon tubulaire (54) .

7. Kit de distribution de produit enroulé (1) selon l'une quelconque des revendications précédentes, dans lequel ledit tube dévidoir est constitué de l'un des matériaux suivants : le carton, le poly(acide lactique) thermoformé, les fibres moulées, un biopolymère moulé par injection.

8. Kit de distribution de produit enroulé (1) selon l'une quelconque des revendications précédentes, dans lequel ladite enceinte (4) est constituée d'une bande de carton ayant une largeur variable, dans lequel ladite largeur est maximale au niveau de ladite ouverture et minimale au niveau d'une position opposée (4).

9. Kit de distribution de produit enroulé (1) selon l'une quelconque des revendications précédentes, dans lequel ladite enceinte (4) est pliée pour former trois parois rectilignes adjacentes agencées sur des plans perpendiculaires et deux coins entre lesdites parois rectilignes.

10. Kit de distribution de produit enroulé (1) selon l'une quelconque des revendications précédentes, comprenant en outre un film thermoplastique thermorétractable recouvrant ladite enceinte (4) encerclant la bobine (2) et l'ensemble connecteur (3), et le tube dévidoir (5).
